# EUROPEAN PATENT APPLICATION

(11) **EP 2 728 167 A2**
(43) Date of publication of application: **07.05.2014**
(21) Application number: 13190019.3
(22) Date of filing: 24.10.2013
(51) Int. Cl.: F03D 1/06

(54) **A wind turbine rotor blade with fabric skin and associated attachment assembly**

(30) Priority: 31.10.2012 US 201213664629
(71) Applicant: General Electric Company, Schenectady, New York 12345 (US)
(72) Inventor: Bagepalli, Bharat Sampathkumaran, Schenectady, NY New York 12345 (US); Lin, Wendy Wen-Ling, Niskayuna, NY New York 12309 (US); Fang, Biao, Schenectady, NY New York 12345 (US); Lopez, Fulton Jose, Niskayuna, NY New York 12309 (US); Krishnamurthy, Sriram, 560066 Bangalore (IN)
(74) Representative: Bedford, Grant Richard

(57) **Abstract**

A rotor blade 16 for a wind turbine 10 includes an internal support structure 50 including a plurality of fixed, spaced support members 76 extending in a chord-wise and span-wise direction and defining a generally aerodynamic contour of the rotor blade 16. A plurality of the support members 76 have an outer surface with a longitudinally extending slot 82 defined therein. A plurality of fabric strips 66 are attached over the internal support structure 50 in a tensioned state and define an aerodynamic outer skin. The fabric strips 66 extend over and are attached to the support members 76 with a longitudinally extending insert member 84 that presses the fabric strips 66 into the slot 82 and lockingly engages within the slot 82.

## Description

The present disclosure relates in general to rotor blades for wind turbines, and more particularly to a rotor blade having a tensioned fabric skin covering.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The construction of a modem rotor blade generally includes skin or shell components, span-wise extending spar caps, and one or more shear webs. The shell components, typically manufactured from layers of fiber composite and a lightweight core material, form the exterior aerodynamic foil shape of the rotor blade. The spar caps provide increased rotor blade strength by integrating one or more structural elements running along the span of the rotor blade on both interior sides of the rotor blade. Shear webs are structural beam-like components running essentially perpendicular between the top and bottom spar caps and extending across the interior portion of the rotor blade between the outer skins.

The size, shape, and weight of rotor blades are factors that contribute to energy efficiencies of wind turbines. An increase in rotor blade size increases the energy production of a wind turbine, while a decrease in weight furthers the efficiency of a wind turbine. Furthermore, as rotor blade sizes grow, extra attention needs to be given to the structural integrity of the rotor blades. Presently, large commercial wind turbines in existence and in development are capable of generating from about 1.5 to about 12.5 megawatts of power. These larger wind turbines may have rotor blade assemblies larger than 90 meters in diameter. Additionally, advances in rotor blade shape encourage the manufacture of a forward swept-shaped rotor blade having a general arcuate contour from the base to the tip of the blade, providing improved aerodynamics. Accordingly, efforts to increase rotor blade size, decrease rotor blade weight, and increase rotor blade strength, while also improving rotor blade aerodynamics, aid in the continuing growth of wind turbine technology and the adoption of wind energy as an alternative energy source.

As the size of wind turbines increases, particularly the size of the rotor blades, so do the respective costs of manufacturing, transporting, and assembly of the wind turbines. The economic benefits of increased wind turbine sizes must be weighed against these factors. For example, to improve stiffness/weight ratio, the current blade architecture demands higher stiffness materials (e.g., carbon) to be used in critical load bearing components, such as the spar caps, which significantly increases the overall cost of wind energy production. As blades get wider and longer, transportation limitations, in both maximum chord width and blade length, start to pose restrictions on blade design. Conventional blade manufacturing processes generally require high upfront equipment costs in molds and associated labor costs, particularly for the shell components.

One known strategy for reducing the costs of pre-forming, transporting, and erecting wind turbines having rotor blades of increasing sizes is to manufacture the rotor blades in blade sections. Each blade section may include a portion of the span-wise extending spar caps and shear webs, or each blade section may be assembled onto large spar caps that extend the full span of the rotor blade. After the individual blade sections are transported to the erection destination, the blade sections are assembled. However, manufacture of current blade sections is difficult. For example, current manufacturing and assembly techniques have encountered problems with bonding line control, edge contour control, reparability of the various blade sections, weight reduction, and the handling of larger components, such as span-wise extending spar caps.

Thus, an improved rotor blade and systems for assembling such a rotor blade for a wind turbine would be desired in the art.

Various aspects and advantages of the invention will be set forth in part in the following description, or may be clear from the description, or may be learned through practice of the invention.

In one embodiment, a rotor blade for a wind turbine is disclosed. The blade includes an internal support structure extending span-wise from a blade root to a blade tip. The internal support structure includes a plurality of fixed, spaced support members extending in a chord-wise and span-wise direction defining a generally aerodynamic contour of the rotor blade. A plurality of the support members have an outer surface with a longitudinally extending groove or slot defined therein. These slots may be defined in any combination of the chord-wise or span-wise support members. A plurality of fabric strips are attached over the internal support structure in a tensioned state and define an aerodynamic outer skin. The fabric strips extend over and are attached to the support members with a longitudinally extending insert member that presses the fabric strips into the slots and lockingly engages within the slots.

In a particular embodiment, a plurality of the chord-wise support members have the longitudinally extending slots defined therein, with the fabric strips tensioned between the chord-wise support members and having chord-wise extending edges attached to the chord-wise support members with the insert members. In alternate embodiments, a plurality of the span-wise support members may also have the longitudinally extending slots defined therein, with the fabric strips also tensioned between the span-wise support members and having span-wise extending edges attached to the span-wise support members with the insert members.

The fabric strips may be made of any pliable, conformable material having the desired properties for a wind turbine blade skin covering. In a particular embodiment, the fabric strips are made from a biaxial woven material that is self-tensioning in a chord-wise direction when stretched in a span-wise direction, and self-tensioning in a span-wise direction when stretched in a chord-wise direction.

The slot and insert member may have various configurations. For example, in one embodiment, the slot may have a keyed cross-sectional profile, with the insert member having a base and a conformable head extending from the base that presses into the keyed slot in a collapsed or compressed state and then locks into the keyed slot in an expanded state. The head may be made of a compressible material, or may have a generally hollow profile so as to be collapsible and expandable.

In yet another embodiment, the slot has a keyed cross-sectional profile, and the insert member has a base and a non-conformable head extending from the base. The head is "non-conformable" in that it does not compress or collapse and, thus, cannot be pushed into the slot from above. The insert member is slidable into the slot from a longitudinal end (or other access) of the support members.

In still a further embodiment, the insert member may be a compressible strip gasket material that presses into the slot. For example, the slot and gasket material may have a generally circular cross-sectional shape, wherein the gasket material is compressed and pushed into the correspondingly shaped slot from above.

Edges of adjacent fabric strips may be pressed into a common slot along a common support member. In an alternate embodiment, the support member may have two or more slots defined in the upper surface thereof, with the edges of adjacent fabric strips may be pressed into separate slots along a common support member.

The insert members may be separate components from the fabric strips, wherein the fabric strips are fitted around the insert members prior to pressing the insert members into the slots. In another embodiment, the insert members are fixed to edges of the fabric strips. For example, the inert members may a gasket-type of material that is sewn into a sleeve around the fabric strip, or otherwise attached to the fabric strip.

The internal support structure may be variously configured. For example, in one embodiment, the chord-wise support members comprise a plurality of spaced-apart aerodynamic ribs interconnected by a plurality of the span-wise support members, which may be opposite spar caps interconnected by a shear web. In another embodiment, the span-wise support elements include a plurality of strip members circumferentially spaced around the aerodynamic contour of the ribs.

In still a further embodiment, the internal support structure may be a truss structure having chord-wise elements connected to span-wise elements so as to define a generally closed-cell skeleton frame structure. A plurality of the span-wise and chord-wise elements may have slots defined therein, with the fabric strips attached to the truss structure with the insert members.

The internal support structure may include any manner of additional members, such as a leading edge member and a trailing edge member interconnecting the ribs along a respective leading and trailing edge of the rotor blade.

The ribs may, in one embodiment, be individually formed closed loop elements fixed to the span-wise support elements. For example, the ribs may be wound directly onto the span-wise extending support elements.

It should be appreciated that any combination of finishing steps may be applied to the fabric strips to enhance the aerodynamic shape and performance of the rotor blade, including reinforcing the seams between adjacent strips, or coating the strips with a resin or other material to provide and essentially seamless outer surface.

Various aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
Fig. 1 is a side view of a wind turbine according to one embodiment of the present disclosure;
Fig. 2 is a perspective view of an exemplary wind turbine rotor blade;
Fig. 3 is a perspective view of an embodiment of internal blade support structure with chord-wise oriented ribs;
Fig. 4 is a perspective view of an alternate embodiment of internal blade support structure with chord-wise oriented ribs;
Fig. 5 is a perspective view of an embodiment with fabric strips attached to the chord-wise ribs;
Fig. 6 is a perspective view of another embodiment of internal blade support structure with chord-wise oriented ribs and a plurality of span-wise extending elements;
Fig. 7 is a perspective view of an embodiment of internal blade support structure in a truss configuration;
Fig. 8 is top, partial cut-away view of an embodiment of a blade in accordance with aspects of the invention;
Fig. 9 is a cross-sectional view of an embodiment of a blade in accordance with aspects of the invention;
Fig. 10 is a cross-sectional view of a former that may be used in a filament winding process wherein ribs are wound directly onto blade support structure;
Fig. 11 is a schematic depiction of an exemplary filament winding process;
Fig. 12 is a cross-sectional view of a former that may be used in a filament winding process wherein ribs are separately formed and attached to blade support structure;
Fig. 13 is a schematic depiction of an exemplary filament winding process; and
Figs. 14 and 15 depict embodiments according to the present invention.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

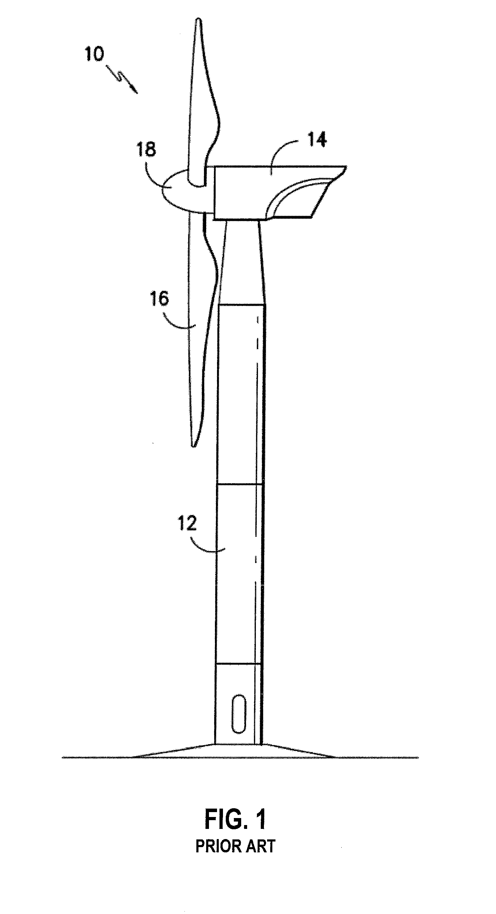

Fig. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of Fig. 1 is provided for illustrative purposes only to place the present invention in an exemplary field of use. It should be appreciated that the invention is not limited to any particular type of wind turbine configuration.

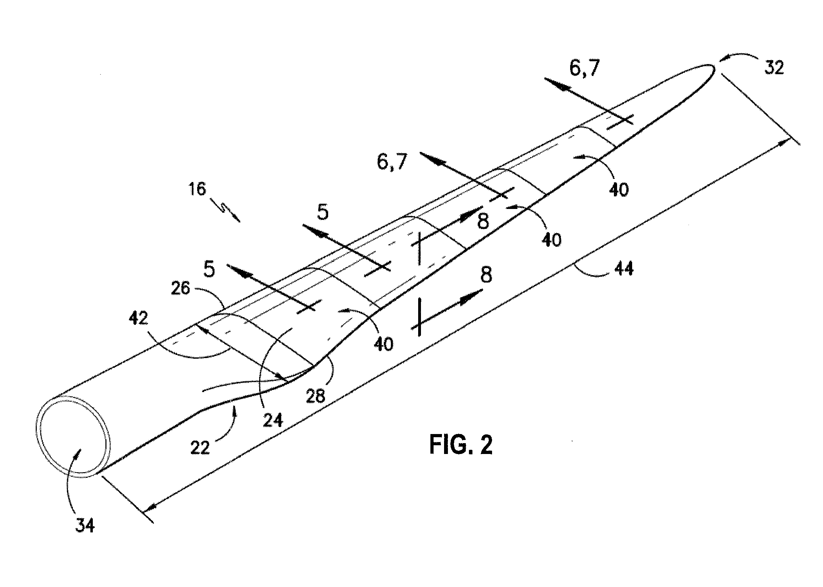

Referring to Fig. 2, a rotor blade 16 according to the present disclosure may include exterior surfaces defining a pressure side 22 and a suction side 24 extending between a leading edge 26 and a trailing edge 28, and may extend from a blade tip 32 to a blade root 34. The exterior surfaces may be generally aerodynamic surfaces having generally aerodynamic contours, as is generally known in the art.

The rotor blade 16 according to the present disclosure may include a plurality of individual fabric sections 40 between the blade tip 32 and the blade root 34. Each of fabric sections 40 may be uniquely configured so that the plurality of sections 40 define a complete rotor blade 16 having a designed aerodynamic profile, length, and other desired characteristics. For example, each of the fabric sections 40 may have an aerodynamic profile that corresponds to the aerodynamic profile of adjacent section 40. Thus, the aerodynamic profiles of the fabric sections 40 may form a continuous aerodynamic profile of the rotor blade 16.

The rotor blade 16 may, in exemplary embodiments, be curved. Curving of the rotor blade 16 may entail bending the rotor blade 16 in a generally flapwise direction and/or in a generally edgewise direction. The flapwise direction may generally be construed as the direction (or the opposite direction) in which the aerodynamic lift acts on the rotor blade 16. The edgewise direction is generally perpendicular to the flapwise direction. Flapwise curvature of the rotor blade 16 is also known as pre-bend, while edgewise curvature is also known as sweep. Thus, a curved rotor blade 16 may be pre-bent and/or swept. Curving may enable the rotor blade 16 to better withstand flapwise and edgewise loads during operation of the wind turbine 10, and may further provide clearance for the rotor blade 16 from the tower 12 during operation of the wind turbine 10.

The rotor blade 16 may further define a chord 42 and a span 44 extending in chord-wise and span-wise directions, respectively. As shown, the chord 42 may vary throughout the span 44 of the rotor blade 16.

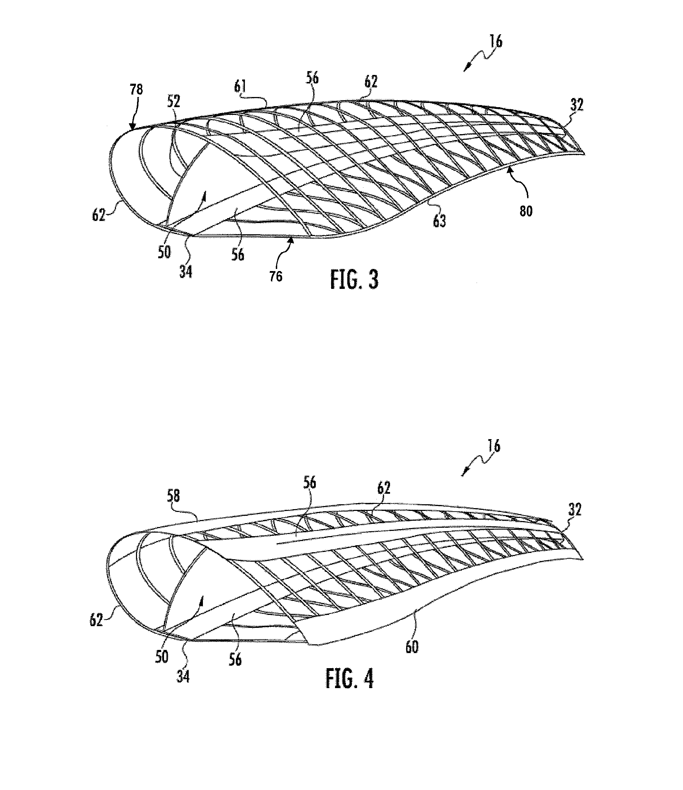

Figs. 3 through 15 illustrate various embodiments of a rotor blade 16 in accordance with aspects of the invention. Referring particularly to embodiments depicted in Figs. 3 through 6, a rotor blade 16 includes an internal support structure 50 that extends span-wise from the blade root 34 to the blade tip 32. This internal support structure 50 may be any manner of conventional structure typically used in wind turbine blades to provide rigidity and dimensional stability to the blade. In the illustrated embodiments, the support structure 50 includes various combinations of support members 76 extending in a chord-wise and span-wise direction to define a generally aerodynamic contour of the rotor blade 16. For example, the support members 76 may include any manner of chord-wise support members 78 configured with span-wise support members 80.

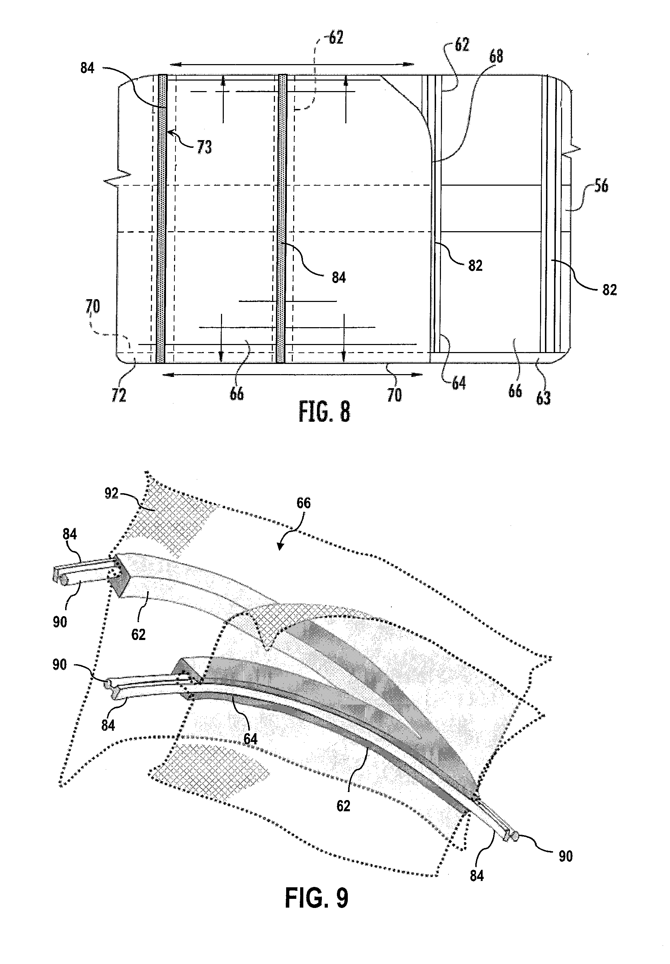

Figs. 3 through 6 depict embodiments wherein the chord-wise support members are defined by a plurality of fixed, spaced-apart ribs 62 that extend in a chord-wise direction and include an outer surface 64 (Figs. 8 and 9) that defines an aerodynamic blade contour. The plurality of ribs 62 are spaced along and attached to any manner of support structure members 76 by any suitable means, examples of which are described in greater detail below. The chord-wise length of the ribs 62 at least partially defines the overall chord 42 of the blade 16 along the span 44. Other components may be added to the ribs 62 that further contribute to the chord 42. The aerodynamic contours of the respective ribs 62 define the overall aerodynamic contour of the assembled rotor blade 16.

It should be appreciated that the configuration of the internal support structure 50 may vary widely within the scope and spirit of the invention. For example, in the embodiments of Figs. 3 and 4, the internal support structure 50 includes a single shear web 52 and associated spar caps 56 that run span-wise along the pressure side 22 and suction side 24 of the blade 16. The shear web 52 and spar cap 56 structure is often referred to as an "I-beam" structure. In an alternate embodiment, the internal support structure 50 may be defined by a box-beam type of structure wherein multiple shear webs extend between opposite spar caps 56. It should be appreciated that the invention is not limited to any particular configuration of internal support structure 50.

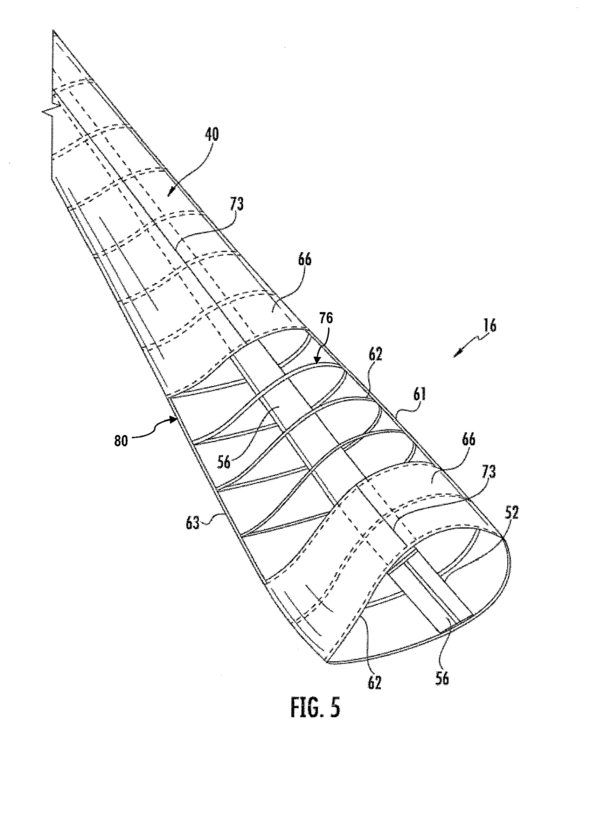

As mentioned, in various embodiments, the internal support structure includes a plurality of span-wise extending support members 80 that interconnect the ribs 62 and add overall structural support and rigidity to the internal support structure 50. For example, in the embodiment of Figs. 3 and 5, the span-wise extending support members 80 may be any type of leading edge support member 61 and trailing edge support member 63 that interconnect the ribs 62 and add structural rigidity to the leading and trailing edges, respectively. The spar caps 56 may also be considered as span-wise extending support elements.

In the embodiment of Fig. 4, the span-wise extending support members 80 include a leading edge cap 58 and/or a trailing edge cap 60 that are affixed to the ribs 62 and wrap around the edges to the pressure and suction sides of the blade. It should be appreciated that any manner of additional spar members may be attached span-wise at any location along the blade 16, and so forth.

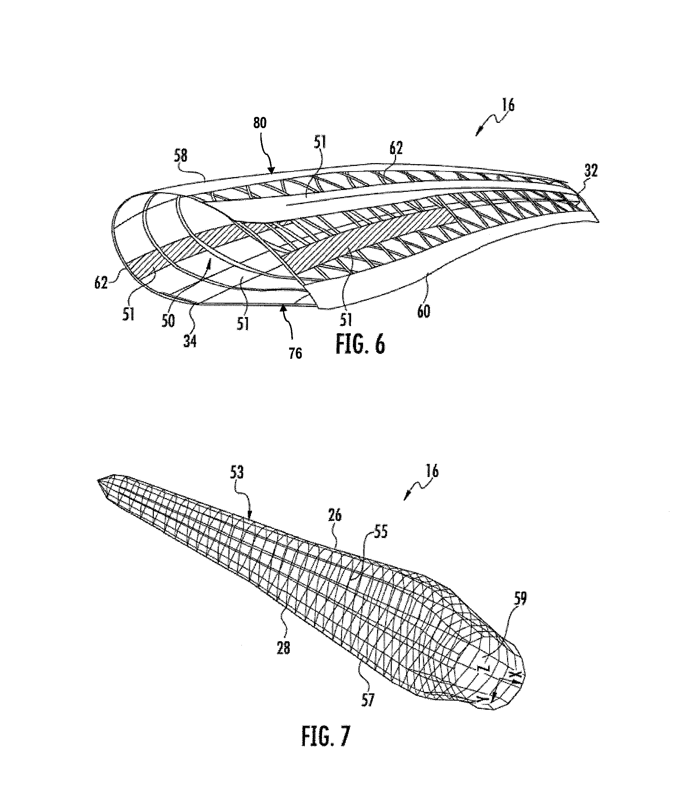

In the embodiment of Fig. 6, the internal support structure 50 includes a plurality of span-wise extending strip members 51in addition to a leading edge cap member 58 and trailing edge cap member 60. The strip members 51 need not extend along the complete span of the blade 16, and are circumferentially spaced around the aerodynamic contour of the ribs 62. It should be appreciated that, with this particular embodiment, the support structure 50 does not include a shear web or similar structure that spans between the pressure and suction sides of the blades to directly interconnect the strip or spar members 51. In other words, the members 51 are interconnected by the ribs, but not by other structure. However, in other embodiments, the members 51may be directly interconnected by a support member (e.g., a shear web 52) between the suction and pressure sides of the blade 16. The members 51 may be formed of any suitable structural material, and the members 51 need not be formed of the same material, as indicated by the different materials indicated in Fig. 6.

Fig. 7 depicts an embodiment wherein the internal support structure is configured as a truss structure 53 wherein a plurality of chord-wise elements 55 are connected to a plurality of span-wise elements 57 to form a grid or web-type skeleton of closed cells 59. The chord-wise elements 53 may be considered as the ribs. As explained in greater detail below, a tensioned fabric is attached to the truss structure 53. The fabric may be fixed to any combination of the chord-wise elements 53 and/or span-wise elements 57.

The various components of the internal support structure 50 (e.g., ribs 62, truss structure 53, span-wise strip or spar members 51, and so forth) may be formed from any suitable structural material, including metals (e.g., steel, aluminum, titanium, and their alloys or combinations thereof) or composites (e.g., GFRP, CFRP, natural composites, and sandwich composites (manufactured by hand lay-up or other methods). The materials may include a combination of metals and composites (including natural composites such as wood, and the like).

Referring generally to Figs. 8 through 13, a plurality of the support members defining the internal support structure 50 include a longitudinally extending recess or slot 82 defined in the outer surface 64 thereof. These slots 82 have a particular profile designed for engaging receipt of a longitudinally extending insert member 84, as described in greater detail below.

Referring to Fig. 5, a plurality of chord-wise oriented fabric strips 66 are affixed to the support members 76 (e.g., ribs 62, leading edge support member 61, trailing edge support member 63, etc.) in a tensioned state. In this configuration, the fabric strips 66 define an outer skin of the rotor blade 16, including the pressure side 22 and suction side 24. In the embodiment illustrated in Fig. 5, each of the individual fabric strips 66 spans between two adjacent ribs 62.

Referring to Figs. 8 and 9, each strip 66 has opposite chord-wise edges 68 that are attached to the outer surface 64 of the respective ribs 62 via an insert member 84 engaged within a respective slot 82. The insert members 84 press the strips 66 into the slots 82, with the insert members 84 lockingly engaging within the slots 82 to prevent unintentional removal or loosening of the fabric strips 66. It should be appreciated that the fabric strips 66 may have a span-wise width (defined between the edges 68) so that the strips 66 span three or more of the ribs 62, or even along the entire span of the blade 16. For example, in the embodiment depicted in Fig. 6, the fabric strip 66 spans three of ribs 62. As depicted in Fig. 9, the fabric strips 66 may also be attached to the intermediate ribs 62 via insert members 84 and slots 82.

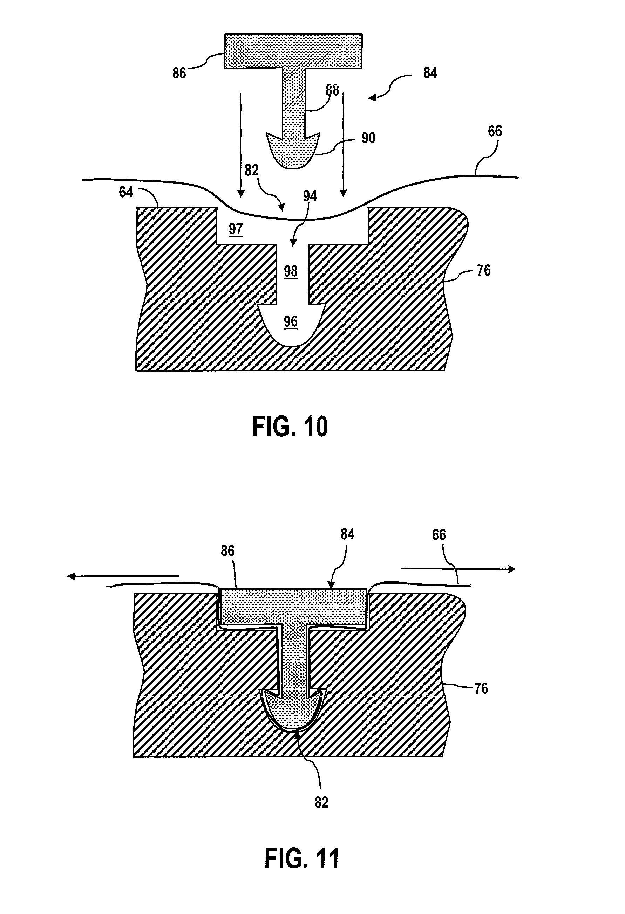

It should be appreciated that the slots 82 and insert members 84 may be variously configured within the scope and spirit of the invention. For example, referring to Figs. 9 through 11, the slots 82 may have a keyed cross-sectional profile 92 with a head portion 96, a narrow shank portion 98, and a surface recess 97. The insert members 84 may have a correspondingly shaped profile with a head 90 that lockingly engages within the head portion 96, a narrow shank 88, and a base 86. Referring to Figs. 10 and 11, the head 90 may conformable in that it compresses or collapses so that the insert member 84 can be pressed into the slot 82 from above, as indicated by the arrows in Fig. 10. For example, the head 90 may be formed form a compressible material, or may have a generally hollow interior that allows the head 90 to collapse at least to an extent the head 90 can be pushed into the head section 96 of the slot 82.

In an alternate embodiment, the head 90 of the insert member 84 may be non-conformable in that it cannot be pressed into the head section 96 of the slot 82. With this combination, the insert member 84 may be slid into the slot 82 from a longitudinal end of the respective support member.

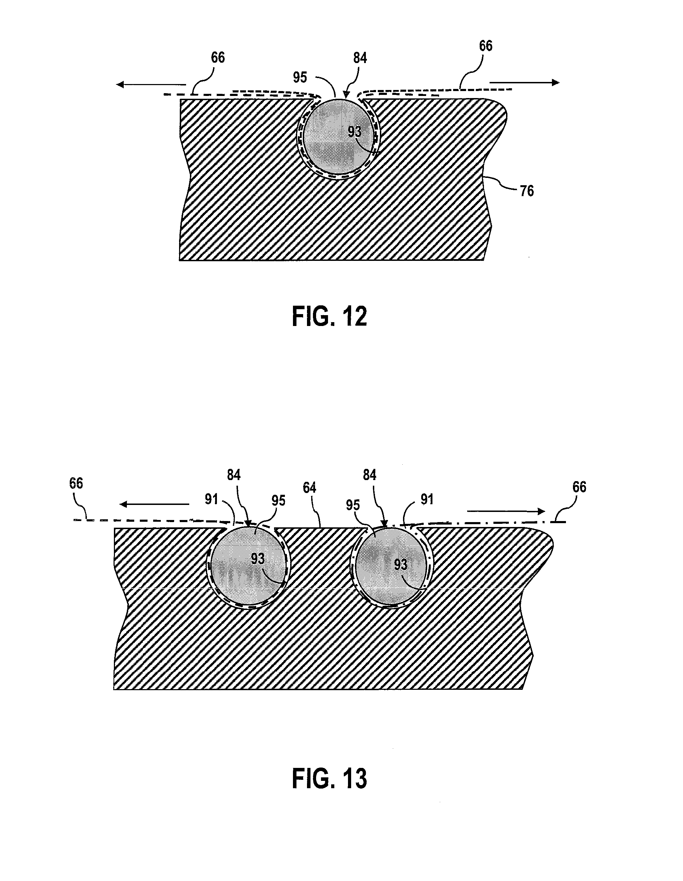

Figs. 12 and 13 depict embodiments wherein the insert member 84 is defined by a compressible gasket-type of material 95, such as a circular cross-sectional material, with the slot 82 defined by a correspondingly shaped circular profile 93. The gasket material 95 is squeezed or compressed, and then pushed into the slot 82 from above, with the fabric strip material 66 wrapping at least partially around the gasket material 95.

The various embodiments of the insert members 84 and slots 82 are designed so that that the insert members 84 assume a generally flush relationship with the top surface 64 of the respective support member when fully engaged within the slots 82. Any manner of finishing material (e.g., tape, adhesive, epoxy, etc.) may be bonded over the joint line 73 (Fig. 8) between the insert member 84 and slot 82.

As can be appreciated from Figs. 10 through 13, the fabric strips 66 are pushed into the slots 82 by the insert members 84 and are thus locked in position relative to the support member. The strips 66 can thus be pulled, stretched, or otherwise tensioned between different, spaced-apart support members. For example, referring to Fig. 5, the chord-wise edges of the fabric strips 66 can be tensioned between respective ribs 62, while the span-wise edges are tensioned between the leading edge support member 61 and trailing edge support member 63.

The edges 68 of adjacent fabric strips 66 may be attached to the outer surface 64 of the ribs 62 via the insert members 84 and slots 82. Referring for example to Fig. 12, the edges of adjacent strips 66 may overlap over the slot 82, wherein a single insert member 84 is used to engage both edges in a common slot 82.

In the embodiment depicted in Fig. 13, the support member 76 includes two slots 82 defined in the upper surface thereof, with the edges of adjacent fabric strips 66 retained in individual slots 82. In this embodiment, the gasket material insert member 95 may be fitted into a sleeve 91 sewn or otherwise formed along the edge of the fabric strip 66. Alternatively, the fabric strip 66 may be folded over the exposed portion of the gasket material 95 and bonded to the oppositely extending portion of the fabric strip 66. In an alternative embodiment depicted in Fig. 8, the edges 68 may overlap on a common rib 62. In still a further embodiment, at least a portion of the ribs 62 is exposed between adjacent strips 66.

A finishing tape may be applied to the seams between adjacent fabric strips 66 to both seal and tension the strips. For example, a double-sided adhesive tape may be applied to edge of a first one of the strips 66 and rolled down. The edge of the adjacent strip 66 may then be applied to the tape and rolled down, wherein the rolling process applies pressure and tension to the fabric strips. Heat and pressure may then be applied to the seam to achieve an optimum bonding of the tape.

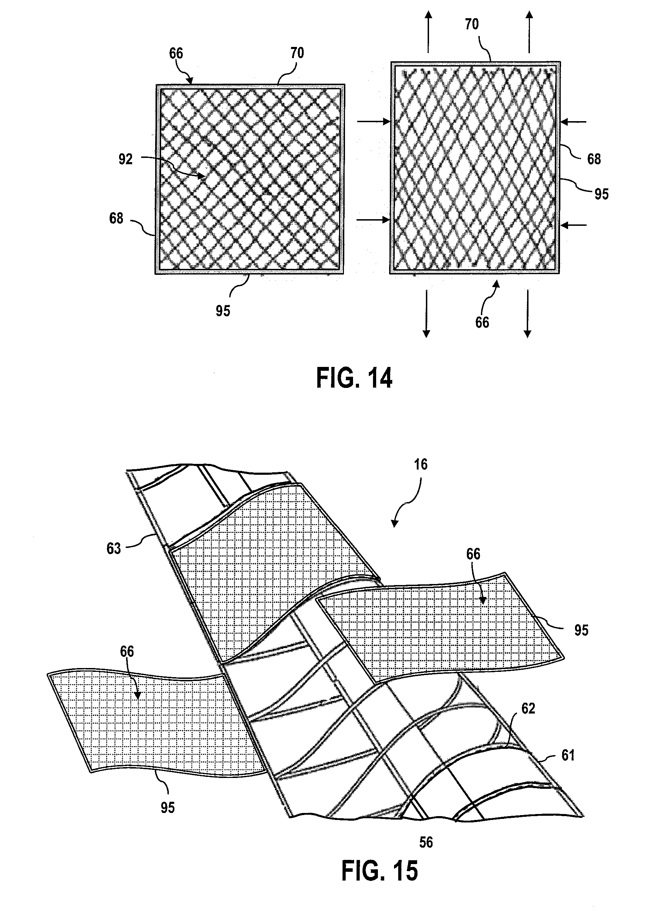

Figs. 14 and 15 depict embodiments wherein the fabric strips 66 are generally framed by insert members 84, which may be the gasket material strips 95. Thus, in this embodiment, the insert members 84 are not separate components, but are integral to the fabric strips along the chord-wise edges 68 and span-wise edges 70. The gasket material 95 may be sewn into sleeves along the edges 68, 70, or otherwise affixed along the edges. Thus, as can be appreciated from Fig. 15, the fabric strips 66 are more like framed panels that are fitted between various members of the support structure 50 via the slot 82 and insert member 84 engagement discussed above.

The blades 16 are not limited by any particular type of fabric for the fabric strips 66. A relatively low cost, light-weight architecture fabric may be desirable in certain embodiments. The fabric may be a woven or non-woven material, including film materials. The fabric material may be a single layer or formed from multiple layers, such as multi-axial fabrics. The fabric material may be resin impregnated and eventually cured to provide a relatively stiff outer skin to the blade 16. Certain types of architecture fabrics that may be used for the present invention include PTFE-coated fiberglass or PVC-coated polyester fabrics. ETFE film may also be suitable in certain environments.

In a particular embodiment depicted in Figs. 14 and 15, the fabric strips 66 are made from a biaxial woven material 92 wherein crossed filaments or fibers define a generally diamond-shaped pattern. This type of material is essentially self-tensioning in both the chord-wise and span-wise directions. As depicted by the arrows in Fig. 14, when pulled or stretched in one direction (e.g., the span-wise direction), the material retracts (narrows) in the other direction. This characteristic may be useful when tensioning the fabric strips 66 between span-wise and/or chord-wise structural members.

Any manner of finishing process or product may be applied to the fabric strips 66 to provide a relatively smooth aerodynamic surface for the pressure 22 and suction 24 sides of the blade. For example, most architectural PVC polyesters have a top coating applied to their exterior surface to improve the appearance and extend the life of the material. Typically, this top coat may be acrylic, polyvinylidene fluoride (PVDF), a PVDF top coat, or a polyvinyl fluoride (PVF) film layer that is laminated to the PVC fabric during manufacture. As mentioned, the fabric strips 66 may be impregnated with a resin, or coated with a resin after application to the ribs 62. Reinforcing tapes may be applied over the seams between adjacent fabric strips 66.

As can be particularly seen in Figs. 3 and 5, the ribs 62 may be defined as closed-loop elements that are fixed to the spar caps 56 by any suitable attachment means, such as adhesives, bonding materials, mechanical means, and so forth. In a particularly unique embodiment, each of the ribs 62 is a wound filament component formed in a conventional filament winding process. The ribs 62 may be wound directly onto the internal support structure 50, or may be individually formed and subsequently attached to the internal support structure 50. In an alternative embodiment, the individual ribs may be molded members that are molded directly with the internal support structure 50, or individually molded and subsequently attached to the support structure 50.

In an alternate embodiment depicted in Fig. 4, the ribs 62 are not closed-loop elements, but are formed from multiple components that are attached to the spar caps 56. These components may be made from any suitable material, including alumina, steel, or composite materials.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A rotor blade for a wind turbine, the rotor blade comprising:
   an internal support structure extending span-wise from a blade root to a blade tip;
   said internal support structure including a plurality of fixed, spaced support members extending in a chord-wise and span-wise direction defining a generally aerodynamic contour of said rotor blade;
   a plurality of said support members having an outer surface with a longitudinally extending slot defined therein;
   a plurality of fabric strips attached over said internal support structure in a tensioned state defining an aerodynamic outer skin; and
   said fabric strips extending over and attached to said support members with a longitudinally extending insert member that presses said fabric strips into said slot and lockingly engages within said slot.
2. The rotor blade as in clause 1, wherein a plurality of said chord-wise support members have an outer surface with said longitudinally extending slots defined therein, said fabric strips tensioned between said chord-wise support members and having chord-wise extending edges attached to said chord-wise support members with said insert members.
3. The rotor blade as in any preceding clause, wherein a plurality of said span-wise support members have an outer surface with said longitudinally extending slots defined therein, said fabric strips tensioned between said span-wise support members and having span-wise extending edges attached to said span-wise support members with said insert members.
4. The rotor blade as in any preceding clause, wherein said fabric strips comprise a biaxial woven material that is self-tensioning in a chord-wise direction when stretched in a span-wise direction, and self-tensioning in a span-wise direction when stretched in a chord-wise direction.
5. The rotor blade as in any preceding clause, wherein said slot comprises a keyed slot cross-sectional profile, said insert member having a base and a conformable head extending from said base that presses into said keyed slot in a collapsed or compressed state and locks into said keyed slot in an expanded state.
6. The rotor blade as in any preceding clause, wherein said slot comprises a keyed slot cross-sectional profile, said insert member having a base and a non-conformable head extending from said base, said insert member slidable into said slot from a longitudinal end of said chord-wise support members.
7. The rotor blade as in any preceding clause, wherein said insert member comprises a compressible strip gasket material that presses into said slot.
8. The rotor blade as in any preceding clause, wherein said slot and said gasket material comprise a generally circular cross-sectional shape.
9. The rotor blade as in any preceding clause, wherein edges of adjacent said fabric strips are pressed into a common said slot along a common said support member.
10. The rotor blade as in any preceding clause, wherein edges of adjacent said fabric strips are pressed into separate said slots along a common said support member.
11. The rotor blade as in any preceding clause, wherein said insert members are separate from said fabric strips, wherein said fabric strips are fitted around said insert members prior to pressing said insert members into said slots.
12. The rotor blade as in any preceding clause, wherein said insert members are fixed to edges of said fabric strips.
13. The rotor blade as in any preceding clause, wherein said insert members define a frame around said fabric strips.
14. The rotor blade as in any preceding clause, wherein said chord-wise support members comprise a plurality of spaced-apart aerodynamic ribs interconnected by a plurality of said span-wise support members.
15. The rotor blade as in any preceding clause, wherein said span-wise support members comprise opposite spar caps interconnected by a shear web.
16. The rotor blade as in any preceding clause, wherein said span-wise support elements comprise a plurality of strip members circumferentially spaced around said aerodynamic contour of said ribs.
17. The rotor blade as in any preceding clause, wherein said internal support structure further comprises a leading edge member and trailing edge member interconnecting said ribs along a respective leading and trailing edge of said rotor blade.
18. The rotor blade as in any preceding clause, wherein said ribs are individually formed closed loop elements fixed to said span-wise support elements.
19. The rotor blade as in any preceding clause, wherein said ribs are wound directly onto said span-wise extending support elements.
20. The rotor blade as in any preceding clause, wherein said internal support structure comprises a truss structure having chord-wise elements connected to span-wise elements so as to define a generally closed-cell skeleton frame structure, a plurality of said span-wise and chord-wise elements having said slots defined therein, said fabric strips attached to said truss structure with said insert members.

## Claims

1. A rotor blade (16) for a wind turbine (10), the rotor blade (16) comprising:
an internal support structure (50) extending span-wise from a blade root to a blade tip;
said internal support structure (50) including a plurality of fixed, spaced support members (76) extending in a chord-wise and span-wise direction defining a generally aerodynamic contour of said rotor blade (16);
a plurality of said support members (76) having an outer surface with a longitudinally extending slot (82) defined therein;
a plurality of fabric strips (66) attached over said internal support structure (50) in a tensioned state defining an aerodynamic outer skin; and
said fabric strips (66) extending over and attached to said support members (76) with a longitudinally extending insert member (84) that presses said fabric strips into said slot (82) and lockingly engages within said slot (82).

2. The rotor blade (16) as in claim 1, wherein a plurality of said chord-wise support members (76) have an outer surface with said longitudinally extending slots defined therein, said fabric strips tensioned between said chord-wise support members and having chord-wise extending edges attached to said chord-wise support members with said insert members.

3. The rotor blade (16) as in any preceding claim, wherein a plurality of said span-wise support members (76) have an outer surface with said longitudinally extending slots defined therein, said fabric strips tensioned between said span-wise support members and having span-wise extending edges attached to said span-wise support members with said insert members.

4. The rotor blade (16) as in any preceding claim, wherein said fabric strips (66) comprise a biaxial woven material that is self-tensioning in a chord-wise direction when stretched in a span-wise direction, and self-tensioning in a span-wise direction when stretched in a chord-wise direction.

5. The rotor blade (16) as in any preceding claim, wherein said slot (82) comprises a eyed slot cross-sectional profile, said insert member having a base and a conformable head extending from said base that presses into said keyed slot in a collapsed or compressed state and locks into said keyed slot in an expanded state.

6. The rotor blade (16) as in any preceding claim, wherein said slot (82) comprises a keyed slot cross-sectional profile, said insert member having a base and a non-conformable head extending from said base, said insert member slidable into said slot from a longitudinal end of said chord-wise support members.

7. The rotor blade (16) as in any preceding claim, wherein said insert member (84) comprises a compressible strip gasket material that presses into said slot.

8. The rotor blade (16) as in any preceding claim, wherein said slot (82) and said gasket material comprise a generally circular cross-sectional shape.

9. The rotor blade (16) as in any preceding claim, wherein edges of adjacent said fabric strips (66) are pressed into a common said slot along a common said support member.

10. The rotor blade (16) as in any preceding claim, wherein edges of adjacent said fabric strips (66) are pressed into separate said slots along a common said support member.

11. The rotor blade (16) as in any preceding claim, wherein said insert members (84) are separate from said fabric strips, wherein said fabric strips are fitted around said insert members prior to pressing said insert members into said slots.

12. The rotor blade (16) as in any preceding claim, wherein said insert members (84) are fixed to edges of said fabric strips.

13. The rotor blade (16) as in any preceding claim, wherein said insert members (84) define a frame around said fabric strips (66).

14. The rotor blade (16) as in any preceding claim, wherein said chord-wise support members (76) comprise a plurality of spaced-apart aerodynamic ribs interconnected by a plurality of said span-wise support members.

15. The rotor blade (16) as in any preceding claim, wherein said span-wise support members (76) comprise opposite spar caps interconnected by a shear web.
